**Europäisches Patentamt**

**European Patent Office**

**Office européen des brevets**

(11) Veröffentlichungsnummer: **0 044 079**

**A1**

(12) # EUROPÄISCHE PATENTANMELDUNG

(21) Anmeldenummer: **81105515.1**

(22) Anmeldetag: **14.07.81**

(51) Int. Cl.³: **B 60 P 1/54**
**B 60 P 1/64**

(30) Priorität: **15.07.80 DE 3026747**

(43) Veröffentlichungstag der Anmeldung:
**20.01.82 Patentblatt 82/3**

(84) Benannte Vertragsstaaten:
**AT BE CH FR GB IT LI LU NL SE**

(71) Anmelder: **Klaus, Kaspar**
**Dr.-Berndl-Strasse 5**
**D-8940 Memmingen(DE)**

(72) Erfinder: **Klaus, Kaspar**
**Dr. Berndl-Strasse 5**
**D-8940 Memmingen(DE)**

(72) Erfinder: **Schäfer, Eberhard, Ing. grad.**
**Birkenlaustrasse 9**
**D-7900 Ulm-Lehr(DE)**

(74) Vertreter: **Pfister, Helmut, Dipl.-Ing.**
**Buxacher Strasse 9**
**D-8940 Memmingen/Bayern(DE)**

(54) **Strassentransportfahrzeug mit einer Vorrichtung zum seitlichen Be- und Entladen der Last.**

(57) Die Vorrichtung zum seitlichen Be- und Entladen, wobei die Last z.B. ein Container (28) ist, umfaßt einen Stüzfuß (1), der in der Transportstellung sich im wesentlichen in der Diagonale des senkrechten Lastquerschnitts erstreckt und in dieser Ausrichtung in die Stützstellung ausfahrbar ist sowie eine Zylinder-Kolben-Einheit (2), die sich im wesentlichen parallel zum Stützfuß erstreckt. Die Einheit (2) dient enerseits zum Ausfahren dieses Stützfußes und andererseits nach dem Ausfahren und nach der Arretierung des Stützfußes in der ausgefahrenen Stellung auch dazu, den Schwenkarm (3) zu bewegen, der die Last, also den Container (28) trägt. Am Schwenkarm ist ein teleskopierbarer Teil (8) mit einem Hubzylinder (9) vorgesehen, um den Manövrierbereich zu verbessern.

Fig.3

Patentanwalt

Dipl.-Ing. **HELMUT PFISTER**

Postscheckkonto München Nr. 1343 39-805
Bankkonto: Bayerische Vereinsbank Memmingen

Buxacher Straße 9
D-8940 MEMMINGEN / BAYERN
Telefon (0 83 31) 6 51 83

**0044079**

14. Juli 1981

Herrn Ing. Kaspar Klaus, Dr. Berndl-Straße 5,
D 8940 Memmingen

---

Straßentransportfahrzeug mit einer Vorrichtung
zum seitlichen Be- und Entladen der Last

---

Die Erfindung betrifft ein Straßentransportfahrzeug mit
einer Vorrichtung zum seitlichen Be- und Entladen der
Last, z. B. eines Containers, wobei die Vorrichtung
vor und hinter der Last angeordnet ist und je aus einem
an der Ladeseite ausstellbaren Stützfuß besteht, an
dem sich das untere Ende einer Zylinder-Kolben-Einheit
abstützt, deren oberes Ende am oberen Ende eines die
Last führenden Schwenkarms angreift.

- 2 -

In der US-PS 3 249 235 ist eine aus Lenkern und Zylinder-Kolben-Einheiten bestehende Vorrichtung beschrieben, die auf einem Fahrzeug angeordnet ist und bei welcher ein Stützfuß seitlich ausgestellt werden kann, an dem sich das untere Ende der Zylinder-Kolben-Einheit abstützt.

Eine Vorrichtung anderer Bauweise ist in der DE-PS 1630 543 beschrieben, bei der der Stützfuß in der Transportstellung nach oben gerichtet ist und seitlich ausschwenkbar ist und wobei die unteren Enden der Zylinder-Kolben-Einheiten am Stützfuß verschiebbar sind. Zur Verbesserung der Führung der Last ist ein schwenkbares Stützrohr vorgesehen, daß in der Fahrzeugmittelebene angeordnet ist.

Die beschriebenen Bauweisen sind im allgemeinen nur dann zu verwirklichen, wenn die Zylinder-Kolben-Einheiten als Teleskop-Zylinder ausgebildet sind, es sei denn, es wird auf einen ausreichend hoch liegenden Lastaufnahmepunkt verzichtet, so daß kein über der Last angeordneter Spreader benützt werden kann, was für viele Zwecke nicht angängig erscheint. Da es ferner insbesondere für die Einschwenkung des Stützfußes beim Übergang in die Transportstellung, aber auch zur besseren Beherrschung der Last notwendig ist, doppelt wirkende Teleskop-Zylinder zu verwenden, ergeben sich sehr aufwendige Konstruktionen. Wohl ist es bei der genannten DE-PS möglich, auf beiden Seiten des Fahrzeuges Ladevorgänge vorzunehmen. Ein Umsetzen einer Last von einer Seite auf die andere Seite eines Fahrzeuges ist jedoch nur umständlich durchführbar.

- 3 -                      **0044079**

Der Erfindung liegt die Aufgabe zugrunde, ein Transportfahrzeug mit einer Vorrichtung zum seitlichen Be- und Entladen der Last zu schaffen, bei der der Herstellungsaufwand stark reduziert ist und wobei dennoch ein mindestens für einfache Bedarfsfälle ausreichendes Gerät erhalten wird.

Diese Aufgabe wird gemäß der Erfindung dadurch gelöst, daß der Stützfuß in der Transportstellung sich im wesentlichen in der Diagonale des senkrechten Lastquerschnitts erstreckt und in dieser Ausrichtung in die Stützstellung ausfahrbar ist, daß die Zylinder-Kolben-Einheit in der Transportstellung und zum Ausfahren des Stützfußes im wesentlichen parallel zum Stützfuß ausgerichtet ist und daß nach Arretierung des Stützfußes in der ausgefahrenen Stellung der die Last tragende Schwenkarm mittels dieser Zylinder-Kolben-Einheit bewegbar ist.

Mit dem erfindungsgemäßen Vorschlag ist es möglich, ein voll einsetzbares Ladegerät auf einem Straßentransportfahrzeug zu schaffen, daß mit einer einzigen Zylinder-Kolben-Einheit vor bzw. hinter der Last auskommt, welche Zylinder-Kolben-Einheit sowohl den Stützfuß bedient als auch beim Ladevorgang die Last bewegt.

Dadurch, daß der Stützfuß in der Diagonale des Querschnitts der Last angeordnet wird, ist es möglich, einen sehr einfach gebauten Stützfuß anzuwenden, der in einem einzigen Bewegungsablauf einerseits ausfährt und andererseits auch den Abstützpunkt

- 4 -

der Zylinder-Kolben-Einheit, die ihn bewegt, in die Arbeitsstellung bringt.

Die angewandte Zylinder-Kolben-Einheit besitzt dabei eine solche Länge, daß ein besonderer aufwendiger Teleskop-Zylinder vermieden wird. Die Zylinder-Kolben-Einheit kann insbesondere auch in der Transportstellung gut untergebracht werden.

Als weiterer Vorteil gegenüber dem Stand der Technik ergibt sich bei der Erfindung, daß der Stützfuß fest mit dem Fahrzeugrahmen verbindbar ist und zwar durch die angegebene Arretierung, so daß auch die Zylinder-Kolben-Einheit die erforderliche stabile Abstützung erhält.

Es ist klar, daß die hydraulische Anlage zur Versorgung dieser einzigen, doppelt wirkenden Zylinder-Kolben-Einheit sehr einfach ist und daß auch die Steuerung dieser Einheit leicht beherrschbar ist. Die bekannten Einrichtungen erfordern demgegenüber immer die Steuerung mehrerer Zylinder-Kolben-Einheiten, was insbesondere in der Bedienung umständlich ist.

Günstig ist bei der Erfindung, daß der Schwenkarm wenigstens in bestimmten Stellungen die Last trägt, wodurch die Beanspruchung der Zylinder-Kolben-Einheit reduziert wird. Soweit die bekannten Vorrichtungen Schwenkarme bzw. Stützrohre benützten, waren diese nur Führungselemente, während die Last allein von der Zylinder-Kolben-Einheit abgestützt wurde.

Bei der Erfindung ist es an sich möglich, mit einem einfachen Schwenkarm auszukommen, der sich an einem Schwenkgelenk am Fahrzeugrahmen oder einem Hilfsrahmen, das alle Ladeelemente verbindet, abstützt und der an seinem freien Ende den Lastangriffspunkt besitzt. Bei geeigneter Wahl des Schwenkgelenkes und einer geeigneten Anordnung für den Transport läßt sich ein solcher Schwenkarm durchaus innerhalb der zulässigen Umrißformen unterbringen. Besser ist jedoch, wenn am freien Schwenkarmende ein ausfahrbarer Hilfsarm mit kleinem Hub angeordnet ist, wobei es dann ausreicht, wenn das Schwenkgelenk des Schwenkarmes nahe der Ladeseite des Fahrzeuges angebracht ist. Die Transportstellung des Schwenkarmes kann dann mit derjenigen Schwenkarmstellung übereinstimmen, in der die Last auf das Fahrzeug aufsetzbar oder vom Fahrzeug aufnehmbar ist.

Bei einer abgewandelten Ausführungsform der Erfindung besitzt der Schwenkarm einen teleskopierbaren Teil mit einem Hubzylinder. Dadurch läßt sich bei geringem Aufwand der Arbeitsbereich des Schwenkarms beträchtlich vergrößern, so daß viele Anwendungsfälle beherrschbar sind.

Bei der bevorzugten Ausführungsform der Erfindung besteht der Schwenkarm aus zwei symmetrischen Teilen, zwischen denen der Stützfuß angeordnet ist. Bei dieser Bauweise bewegen sich Schwenkarm und Stützfuß in der gleichen Ebene, so daß die Überleitung der Kräfte vom Lastaufnahmepunkt zum Stützfuß ohne Entstehung zusätzlicher Momente möglich ist.

Eine senkrechte Stellung des Schwenkarmes für den Transport und für das Absetzen der Last auf das Fahrzeug läßt sich dann erreichen, wenn am Schwenkarm ein Ansatz angeordnet ist, der von der Ladeseite weggerichtet ist und an dem das Ende der Zylinder-Kolben-Einheit angreift.

In der Zeichnung sind zwei Ausführungsbeispiele der Erfindung schematisch dargestellt. Es zeigen:

Fig. 1      eine Rückansicht eines erfindungsgemäßen Straßentransportfahrzeuges, wobei sich die Ladevorrichtung in der Transportstellung befindet und die Ladestellung mit strichpunktierten Linien angedeutet ist,

Fig. 2      eine Seitenansicht zur Darstellung der Fig. 1 und

Fig. 3      eine Rückansicht eines abgewandelten Ausführungsbeispiels nach der Erfindung.

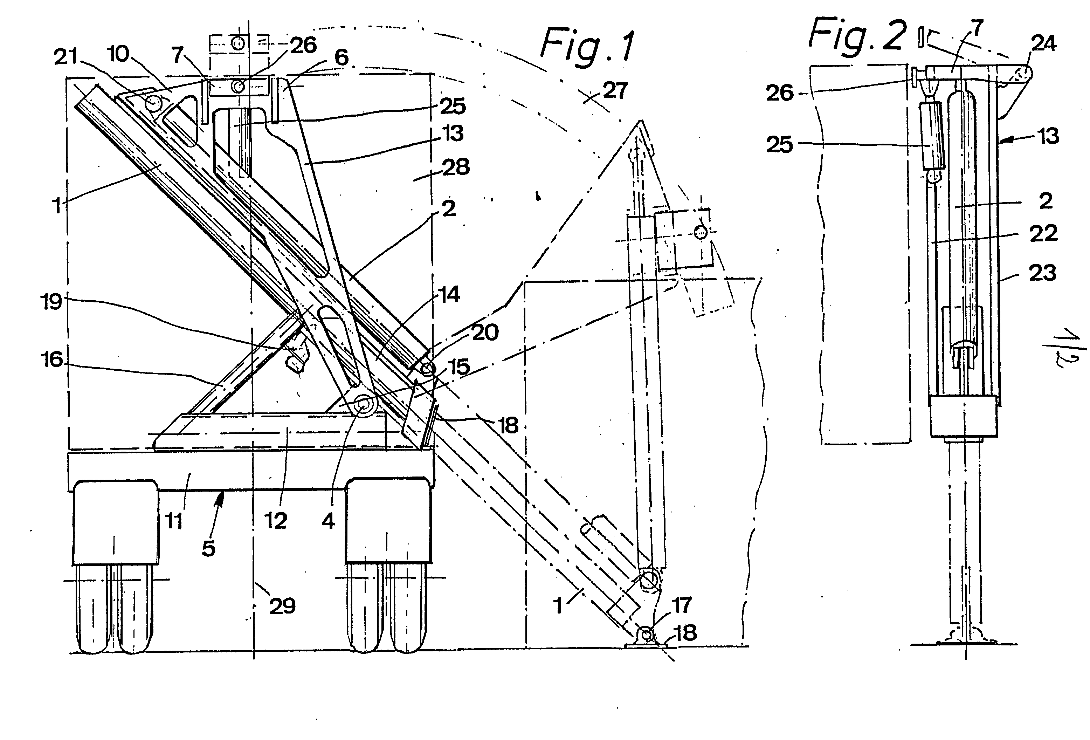

Das Fahrzeug 5 des Ausführungsbeispiels der Fig. 1 trägt auf dem Rahmen 11 einen Hilfsrahmen 12, in dem die wesentlichen Teile der erfindungsgemäßen Ausbildung zusammengefaßt sind. Insbesondere ist dieser Hilfsrahmen 12 mit einer Führung 14 versehen, die bei 15 am Hilfsrahmen befestigt und mittels der Strebe 16 abgestützt ist. Diese Führung nimmt den Stützfuß 1 auf, der beispielsweise rohrartig gestaltet ist und an seinem unteren Ende in an sich bekannter Weise eine um ein Gelenk 17 verschwenkbare Stützplatte 18 trägt.

Mittels der lösbaren Arretierung 19 kann der Stützfuß in seinen jeweiligen Stellungen gesichert werden. Wird die Arretierung 19 gelöst und die Zylinder-Kolben-Einheit 2 beaufschlagt, wird der Stützfuß 1 in die ausgefahrene mit strichpunktierten Linien dargestellte Stellung bewegt. Die Zylinder-Kolben-Einheit 2 stützt sich dabei bei 20 am unteren Ende des Stützfußes ab. Das obere Ende der Zylinder-Kolben-Einheit 2 ist bei 21 mit dem Ansatz 10 verbunden, der am oberen Ende 6 des Schwenkarms 13 angesetzt ist. Der Schwenkarm 13 ist um das Schwenkgelenk 4 am Hilfsrahmen 12 beweglich.

Der Schwenkarm 13 kann ebenfalls eine Arretierung aufweisen, die jedoch in der Zeichnung nicht dargestellt ist. Notwendig ist eine solche Arretierung nicht.

Der Schwenkarm 13 besteht im wesentlichen aus zwei zueinander symmetrischen Teilen 22 und 23 (siehe Fig. 2), wobei sich der eine Teil vor und der andere Teil hinter dem Stützfuß 1 und der Zylinder-Kolben-Einheit 2 befindet. Im oberen Teil ist am Schwenkarm 13 ein Hilfsarm 7 im Gelenk 24 gelagert und mittels einer kleinen Zylinderkolbenanordnung 25 beweglich. Damit kann der Lastaufhängepunkt 26 für den Ladevorgang in eine ausreichende Höhenlage gebracht werden, für den Straßentransport jedoch in die Umrißlinien der Last zurückbewegt werden. Mittels des Hilfsarms 7 läßt sich ein schmaler Arbeitsbereich 27 bestreichen, der für einen einfachen Auf- bzw. Abladevorgang der Last 28 ausreicht. Die Last kann beispielsweise ein Container sein. Die Erfindung ist aber auch bei anderen Fahrzeugen, beispielsweise mit Wechselaufbauten oder anderen großen, in einem Arbeitsgang auf- oder abladbare Last anwendbar.

Zu ergänzen ist noch, daß die in den Fig. 1 und 2 gezeigte Ladevorrichtung sinngemäß auch auf der Vorderseite der Last angeordnet ist und daß beide Vorrichtungen beim Ladevorgang zusammenwirken. Dabei werden jeweils die Lastaufnahmepunkte 26 mit einem auf der Last 28 ruhenden, nicht näher dargestellten Spreader verbunden oder es werden geeignete Zugelemente zwischen der Last und dem Lastaufnahmepunkt vorgesehen.

Während die beiden Teile 22 und 23 des Schwenkarmes 13 als Blechkonstruktionen ausgestaltet sind, zeigt die Fig. 2 einen Schwenkarm 3, der im wesentlichen die Form eines teleskopierbaren Rohres besitzt. Am Schwenkarm 3 ist der Ansatz 10 angeordnet und der mittels des Hubzylinders 9 teleskopierbare Schwenkarmteil ist mit 8 bezeichnet. Der Hubzylinder 9 stützt sich bei 30 in einem Gelenk ab.

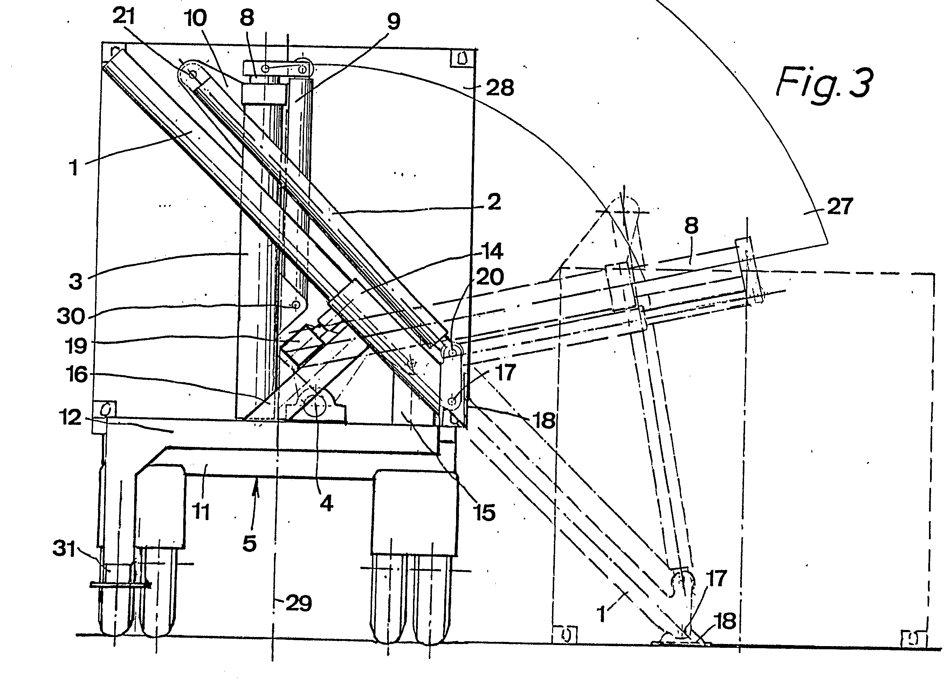

Während beim Ausführungsbeispiel nach den Fig. 1 und 2 die Schwenkachse 4 verhältnismäßig nahe an der Ladeseite angeordnet ist, ist im Ausführungsbeispiel der Fig. 3 die Schwenkachse 4 nahe der Mittelebene 29 vorgesehen und dadurch gelangt der Schwenkarm 2 im wesentlichen in eine senkrechte Transportstellung, die auch für den Ladevorgang auf den Transportfahrzeug günstig ist. Der Arbeitsbereich 27 ist wegen des Teils 8 größer als im Ausführungsbeispiel der Fig. 1 und 2.

Der Hilfsrahmen 11 ist noch mit einem zusätzlichen Stützfuß 31 versehen, der in vertikaler Richtung absenkbar ist.

Die Arbeitsweise des Straßentransportfahrzeugs nach der Fig. 3 entspricht der-jenigen nach der Fig. 1. Der Schwenkarm 3 ist in Längsrichtung versetzt gegenüber dem Stützfuß 1.

Patentanwalt

Dipl.-Ing. **HELMUT PFISTER**

Postscheckkonto München Nr. 1343 39-805
Bankkonto: Bayerische Vereinsbank Memmingen

Buxacher Straße 9     **0044079**
D-8940 MEMMINGEN/BAYERN
Telefon (0 83 31) 6 51 83

**1 4. Juli 1981**

Patentansprüche

1. Straßentransportfahrzeug mit einer Vorrichtung zum seitlichen Be- und Entladen der Last, z. B. eines Containers, wobei die Vorrichtung vor und hinter der Last angeordnet ist und je aus einem an der Ladeseite ausstellbaren Stützfuß besteht, an dem sich das untere Ende einer Zylinder-Kolben-Einheit abstützt, deren oberes Ende am oberen Ende eines die Last führenden Schwenkarms angreift, dadurch gekennzeichnet, daß der Stützfuß (1) in der Transportstellung sich im wesentlichen in der Diagonale des senkrechten Lastquerschnitts erstreckt und in dieser Ausrichtung in die Stützstellung ausfahrbar ist, daß die Zylinder-Kolben-Einheit (2) in der Transportstellung und zum Ausfahren des Stützfußes

- 2 -

im wesentlichen parallel zum Stützfuß ausgerichtet ist und daß nach einer Arretierung des Stützfußes in der ausgefahrenen Stellung der die Last tragende Schwenkarm (3,13) mittels dieser Zylinder-Kolben-Einheit bewegbar ist.

2. Straßentransportfahrzeug nach Anspruch 1, dadurch gekennzeichnet, daß das Schwenkgelenk (4) des Schwenkarms (13) nahe der Ladeseite des Fahrzeugs (5) angeordnet ist und am freien Schwenkarmende (6) ein ausfahrbarer Hilfsarm (7) mit kleinem Hub angeordnet ist.

3. Straßentransportfahrzeug nach Anspruch 1, dadurch gekennzeichnet, daß der Schwenkarm (3) einen teleskopierbaren Teil (8) mit einem Hubzylinder (9) aufweist.

4. Straßentransportfahrzeug nach einem oder mehreren der vorhergehenden Ansprüche, dadurch gekennzeichnet, daß der Schwenkarm (13) aus zwei zueinander symmetrischen Teilen besteht, zwischen denen der Stützfuß (1) angeordnet ist.

5. Straßentransportfahrzeug nach einem oder mehreren der vorhergehenden Ansprüche, dadurch gekennzeichnet, daß am freien Schwenkarmende (6) ein Ansatz (10) angeordnet ist, der von der Ladeseite des Fahrzeuges weggerichtet ist und an dem das obere Ende der Zylinder-Kolben-Einheit (2) angreift.

Der Patentanwalt

0044079

1/2

Fig. 1

Fig. 2

Fig.3

**Europäisches Patentamt**

**EUROPÄISCHER RECHERCHENBERICHT**

0044079

Nummer der Anmeldung

EP 81 10 5515.1

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - B2 - 2 204 812 (KLAUS)  * ganzes Dokument *  -- | 1,2 |
| | DE - A1 - 2 535 052 (HAMMER)  * Fig. 1, Positionen 5, 17 *  -- | 1 |
| | DE - A - 1 605 882 (PARATOR)  * Fig. 2 *  -- | 2 |
| A | DE - B2 - 1 630 599 (KLAUS)  -- | |
| A | DE - B2 - 2 046 057 (TEWI-PAT)  -- | |
| A | DE - A1 - 2 641 262 (LYKA ENGINEERING)  -- | |
| D | DE - C - 1 630 543 (TEWI-PAT)  -- | |
| D | US - A - 3 249 235 (ROBERTS)  ---- | |

**KLASSIFIKATION DER ANMELDUNG (Int. Cl.³)**

B 60 P   1/54
B 60 P   1/64

**RECHERCHIERTE SACHGEBIETE (Int. Cl.³)**

B 60 P   1/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 09-10-1981 | LUDWIG |

EPA form 1503.1   04.78